# EUROPEAN PATENT SPECIFICATION

(11) **EP 0 506 797 B1**
(45) Date of publication and mention of the grant of the patent: **01.06.1994**
(21) Application number: 91901747.5
(22) Date of filing: 14.12.1990
(51) Int. Cl.: B60S 1/02

(54) **INDEPENDENT HEATING SYSTEM FOR A MOTOR VEHICLE**
UNABHÄNGIGE HEIZUNGSANLAGE FÜR EIN KRAFTFAHRZEUG
SYSTEME DE CHAUFFAGE INDEPENDANT POUR VEHICULE A MOTEUR

(30) Priority: 20.12.1989 DE 3942053
(43) Date of publication of application: 07.10.1992
(73) Proprietor: AUDI AG, 85045 Ingolstadt (DE)
(72) Inventor: STERLER, Georg, D-8071 Grossmehring (DE)
(74) Representative: Le Vrang, Klaus
(86) International application number: EP9002186
(87) International publication number: WO9108932

(56) References cited:
- EP-A- 208 318
- EP-A- 314 454
- FR-A- 2 420 455
- GB-A- 2 198 261
- US-A- 4 277 672

## Description

The invention relates to an independent heating system comprising electric components for a motor vehicle according to the preamble of claim 1.

Independent heating systems in motor vehicles heat the interior before the internal combustion engine is started, particularly during cold periods. The heat which is delivered defrosts the frozen-over panes. It is therefore unnecessary to scrape off frost, etc.

The object of the invention is to make the independent heating system more convenient to use.

The object is solved by the main claim.

According to the invention together with the independent heating system further electrical consuming devices are put into operation, these consuming devices comprising also the rear window heating system. However, The electrical consuming devices are not always switched on, so e. g. it is only necessary to put the heating system of the rear window in operation only when the temperatures are about 0° or below. The amount of energies supplied to the electrical consumers depends on the ambient temperature since of course it needs more energy to defrost the rear window at very low temperatures in comparison to that energy needed when the temperature is about 0°. The amount of energy supplied to the consumers is controlled by the duty cycle of the current. The ambient temperature is determined by a current consumption of the rear view mirrors which are also electrically heatable, and the amount of current used by this mirrors depends on the temperature.

The GB-A 2 198 261 suggests to heat the windscreens of a vehicle together with other consumers, e. g. the rear window. It is suggested to start the heating at a predetermined time interval prior to the desired time of departure.

The EP-A 0 208 318 describes an electrical switch for an electrical load, e. g. for controlling the heating of consumers in a motor vehicle. It is not suggested to combine the operation of the electrical consumers together with the heating system.

The US-A 4,277,672 suggests to control an electrical consumer in a motor vehicle by controlling the duty cycle. The temperature itself is measured by an usual temperature sensor.

In a prefered embodiment of the invention also the electically heatable seats are integrated in the preheating system providing a combined heating of the interior of the car itself and of the operation of the electrical consumers.

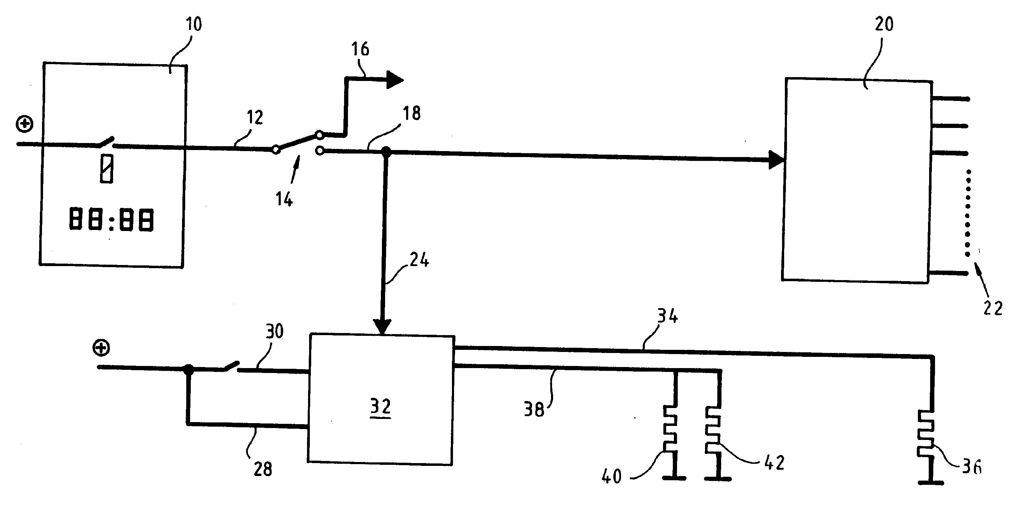

The invention is illustrated in the following on the basis of the drawing.

The reference number 10 designates a control unit for the independent heating system, preferably with integral timer. This unit is supplied with a positive voltage and comprises an output 12. A switch 14 is provided for summer and winter operation and can be switched over either manually or automatically by the ambient temperature. A line 16 is activated for summer operation, and it is of course possible to activate a ventilating and/or cooling operation instead of the heating energy of the independent heating system.

If the switch 14 is set to winter operation, a line 18 is activated which in turn activates the unit 20 as control unit for the independent heating system, the outputs and inputs 22 of which unit supply information to the unit and activate appropriate components (heater, fan).

A second line 24 simultaneously activates a timing and/or logic circuit 32, which is supplied via a line 28 with a positive voltage and receives via a line 30 information as to whether or not the rear window heating system is switched on. The rear window heating system is of course usually out of operation when the ignition is off, in spite of the switch being on.

When the independent heating system is activated the timing and logic circuit 22 activates the lines 34 and 38 continuously or at intervals, the line 34 activating the rear window heating system 36 and the line 38 the outside mirror heating systems 40 and 42.

As is now usual, the rear window heating system 36 and the outside mirrors 40 and 41 may be simultaneously operated by a single switch. However they can in particular also be activated separately by the logic circuit 32, independently of the ambient temperatures. An integral battery voltage monitoring system may also be provided, in order particularly to switch off high current-consumption devices first of all when the battery voltage is too low.

A measuring sensor can measure the flow of current through the mirror heating systems 40 and 42, which flow is dependent on the temperature of the heating conductors. Current consumption is high particularly when the temperature is low, and the level of the current demand can be used to set a duty ratio, which on the one hand minimises the current consumption, yet on the other ensures that the mirror or the panes is/are kept clear.

This duty ratio may also vary with time, in order to permit an initial clearing operation and subsequently to prevent further misting or freezing-over.

## Claims

1. Independent heating system comprising electric components for a motor vehicle comprising a control unit with a timer (10), characterised in
a) that further electrical consuming devices (36, 40, 42) are connected continuously or for timed periods, when the independent heating system is operating,
b) that the further consuming devices comprise the rear window heating system (36),
c) that the further electrical consuming devices are switched on in accordance with the ambient temperature and the duty cycle of the supplied energy is dependent on the ambient temperature,
d) that the ambient temperature is determined by measuring the current consumption of the heating elements for the outside mirror.

2. Independent heating system according to claim 1, characterised in that the further electrical consuming devices comprise the seat heating system.

## Patentansprüche

1. Unabhängiges Heizsystem für ein Motorfahrzeug mit einer Steuereinheit mit einem Zeitgeber (10), dadurch gekennzeichnet, daß
a) weitere elektrische Verbrauchereinheiten (36, 40, 42) kontinuierlich oder in bestimmten Zeitabständen angeschlossen werden, wenn das unabhängige Heizsystem in Betrieb ist,
b) daß die weiteren Verbrauchereinheiten die Heckscheibenheizung (36) umfassen,
c) daß die weiteren elektrischen Verbraucher in Abstimmung mit der Umgebungstemperatur eingeschaltet werden und der Taktzyklus der zugeführten Energie abhängig ist von der Umgebungsenergie,
d) und daß die Umgebungstemperatur durch den Stromverbrauch des Heizelementes für den Außenspiegel bestimmt wird.

2. Unabhängiges Heizungssystem nach Anspruch 1, dadurch gekennzeichnet, daß die weiteren elektrischen Verbraucher die Sitzheizung umfassen.

## Revendications

1. Système de chauffage indépendant, comprenant des composants électriques, pour un véhicule à moteur équipé d'une unité de commande avec une minuterie (10), caractérisé en ce que
a) d'autres dispositifs consommateurs d'électricité (36, 40, 42) sont branchés d'une manière continue ou pendant des périodes réglées lorsque le système de chauffage indépendant est en service,
b) les autres dispositifs consommateurs comprennent le système de chauffage de la glace arrière (36),
c) les autres dispositifs consommateurs d'électricité sont mis en circuit en fonction de la température ambiante et le cycle opératoire de l'énergie fournie est dépendant de la température ambiante,
d) la température ambiante est déterminée par la mesure de la consommation de courant des éléments chauffants pour le rétroviseur latéral.

2. Système de chauffage indépendant selon la revendication 1, caractérisé en ce que les autres dispositifs consommateurs d'électricité comprennent le système de chauffage des sièges.
